(19) Europäisches Patentamt
European Patent Office
Office européen des brevets

(11) Numéro de publication : **0 387 109 B1**

# (12) FASCICULE DE BREVET EUROPEEN

(45) Date de publication du fascicule du brevet : **29.12.93 Bulletin 93/52**

(51) Int. Cl.$^5$ : **C01F 7/02,** B01J 21/04, B01J 37/08

(21) Numéro de dépôt : **90400228.4**

(22) Date de dépôt : **26.01.90**

(54) **Procédé de fabrication d'agglomérés d'alumine activée, agglomérés obtenus par le procédé et dispositif pour sa mise en oeuvre.**

(30) Priorité : **01.02.89 FR 8901264**

(43) Date de publication de la demande : **12.09.90 Bulletin 90/37**

(45) Mention de la délivrance du brevet : **29.12.93 Bulletin 93/52**

(84) Etats contractants désignés : **AT BE CH DE DK ES FR GB GR IT LI LU NL SE**

(56) Documents cités :
**EP-A- 0 055 164**
**GB-A- 1 042 158**
**US-A- 3 628 914**

(73) Titulaire : **RHONE-POULENC CHIMIE DE BASE**
**25, quai Paul Doumer**
**F-92408 Courbevoie (FR)**

(72) Inventeur : **Mercier, Marc**
**1010 Chemin Sous St.Etienne**
**F-30100 Ales (FR)**
Inventeur : **Curcio, Marc**
**6, Avenue du Parc**
**F-30340 Salindres (FR)**

(74) Mandataire : **Esson, Jean-Pierre et al**
**RHONE-POULENC CHIMIE Service Brevets**
**Chimie 25, quai Paul Doumer**
**F-92408 Courbevoie Cedex (FR)**

**EP 0 387 109 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de fabrication d'agglomérés d'alumine activée, les agglomérés obtenus et un dispositif pour la mise en oeuvre de celui-ci.

Elle concerne plus particulièrement un procédé de traitement hydrothermal d'agglomérés d'alumine activée.

Certains procédés catalytiques, tels que la catalyse hétérogène, par exemple dans le domaine de traitement des coupes pétrolières, ou le traitement des effluents gazeux comme les gaz d'échappement des moteurs à combustion interne, demandent l'utilisation de supports présentant une grande porosité, de bonnes propriétés mécaniques telles qu'une bonne résistance à l'écrasement, à l'attrition, par exemple.

Les supports à base d'alumine activée répondent à ces critères, notamment quand ils ont subi un traitement hydrothermal. En effet, ce traitement permet d'améliorer de manière sensible les propriétés mécaniques des agglomérés.

Ce traitement hydrothermal est déjà connu. Il a été décrit, par exemple dans le brevets français n° 1386364, 1449904 et 2496631, et les brevets américains n° 3628914 et 3480389.

Ce traitement hydrothermal consiste à imprégner les agglomérés d'alumine avec de l'eau ou une solution aqueuse acide puis à porter ces agglomérés disposés à l'intérieur d'un autoclave, à une température supérieure à 80°C.

Les agglomérés ainsi traités sont ensuite séchés puis subissent un traitement thermique ou calcination à une température donnée. Cette température de calcination est choisie en fonction de la surface spécifique recherchée et de la température d'utilisation de ces supports.

La demanderesse a trouvé une amélioration aux procédés de traitement hydrothermal déjà connus qui permet notamment d'améliorer les propriétés mécaniques des produits obtenus, par exemple d'obtenir une meilleur résistance à l'attrition.

A cet effet, l'invention propose un procédé de fabrication d'agglomérés d'alumine active consistant à les soumettre à un traitement hydrothermal dans un autoclave puis à les sécher et les soumettre à un traitement thermique pour obtenir, notamment, la surface spécifique désirée.

Selon l'invention, ce traitement hydrothermal consiste à imprégner les agglomérés avec de l'eau ou une solution aqueuse acide, à les disposer dans une enceinte elle-même disposée dans l'autoclave et à porter les agglomérés à une température au moins égale à 80°C par chauffage au moyen d'un fluide caloporteur alimenté autour des parois de ladite enceinte, et à l'intérieur de l'autoclave.

Avantageusement, ce fluide caloporteur est à l'état gazeux ou de vapeur et de préférence est de la vapeur d'eau.

Ainsi, le flux de fluide caloporteur ne rentre pas directement en contact avec les agglomérés, ce qui semble-t-il permet d'obtenir des produits présentant de meilleurs propriétés mécaniques.

Cette hypothèse n'est donnée qu'à titre indicatif et explicatif et ne peut être considérée comme une limitation de l'invention.

Selon une autre caractéristique de l'invention, l'enceinte contenant les agglomérés d'alumine n'est pas étanche et comprend de préférence une multitude d'ouvertures permettant ainsi à l'eau de condensation de s'écouler à travers le lit d'agglomérés.

Avantageusement, l'enceinte est remplie partiellement par les agglomérés d'alumine. En effet, dans certains cas le traitement hydrothermal provoque une expansion des agglomérés.

Selon une nouvelle caractéristique de l'invention, les agglomérés sont mis en mouvement les uns par rapport aux autres, par exemple, par mise en mouvement de l'enceinte, avantageusement par sa mise en rotation.

Dans un mode de réalisation préféré de l'invention, l'enceinte est mise en rotation autour d'un axe sensiblement horizontal.

Les agglomérés d'alumine traités par le procédé de l'invention sont des agglomérés obtenus par mise en forme, selon un procédé quelconque, d'alumine active obtenue, par exemple, à partir de gels d'alumine, d'alumine obtenue par déshydratation d'hydroxyde d'aluminium.

Le procédé s'applique notamment aux agglomérés obtenus à partir d'alumine active produite par le procédé de déshydratation rapide d'un hydroxyde d'aluminium, tel que par exemple la bayérite, l'hydrargillite ou gibbsite, la nordstrandite ou des oxyhydroxydes d'aluminium tels que la boehmite ou le diaspore.

Cette déshydratation est obtenue à l'aide d'un courant de gaz chaud permettant d'éliminer et entraîner très rapidement l'eau évaporée.

La température des gaz dans l'appareillage varie généralement de 400 à 1 200 °C environ avec un temps de contact de l'hydroxyde avec les gaz chauds de l'ordre d'une fraction de seconde à 4 ou 5 secondes.

L'alumine ainsi obtenue peut être utilisée telle quelle ou peut subir un traitement pour éliminer notamment les alcalins présents.

La surface spécifique mesurée par la méthode BET de l'alumine active obtenue par déshydratation rapide d'hydroxydes ou d'oxyhydroxydes d'aluminium varie généralement entre environ 50 et 400 $m^2/g$, le diamètre des particules est généralement compris entre 0,1 et 300 μm, de préférence entre 1 et 120 μm.

Cette alumine présente un volume poreux de l'ordre de 10 à 50 $cm^3/g$, les pores ayant des dimensions inférieures à 50 nm (500 Å).

L'invention s'applique dans les exemples donnés ci-dessous à une alumine active provenant de la déshydratation rapide de l'hydrate de Bayer (hydrargillite) qui est un hydroxyde d'aluminium industriel facilement accessible et très bon marché.

Une telle alumine active est bien connue de l'homme de métier et a notamment été décrite dans le brevet français n° 1108011.

L'agglomération de l'alumine active est réalisée selon les méthodes connues de l'homme du métier telles que, par exemple, par pastillage, extrusion, mise en forme sous forme de billes au granulateur...

Cette agglomération peut être réalisée sur l'alumine active telle qu'elle est obtenue par déshydratation et éventuellement traitement subséquent, ou sur une alumine active broyée à une ou plusieurs granulométries déterminées.

Des agents porogènes peuvent être ajoutés à l'alumine active avant ou pendant l'agglomération pour obtenir une porosité élevée et notamment des pores ayant un diamètre supérieur à 60 nm environ.

Ces agglomérés, avant de subir un traitement hydrothermal, peuvent être soumis à différents traitements, comme par exemple calcination, maturation etc...

Avant de subir le traitement hydrothermal, les agglomérés sont imprégnés par une solution aqueuse.

Cette imprégnation peut être réalisée avant l'alimentation des agglomérés dans l'enceinte ou quand les agglomérés sont déjà disposés dans l'autoclave.

Dans ce dernier cas, la solution d'imprégnation est injectée à travers le lit d'agglomérés.

Dans le premier cas, l'imprégnation est réalisée selon des techniques connues telles que l'imprégnation par immersion, au tonneau ou au granulateur, par exemple.

Les solutions d'acides convenables pour l'invention sont, par exemple, les solutions d'acides nitrique, chlorhydrique, perchlorique, sulfurique ou les acides plus faibles, tels que l'acide acétique, dont la solution a un pH inférieur à environ 4, ou un mélange d'acides. Selon un mode de réalisation préférée, l'acide nitrique et l'acide acétique seuls ou en mélange, sont les plus employés.

Il est également possible d'imprégner les agglomérés d'alumine mûris par une solution d'acides et de composés apportant un anion capable de se combiner avec les ions aluminium en solution, comme décrit dans le brevet français n° 2496631.

Ainsi, à titre d'exemple on peut citer les composés comprenant un anion nitrate, chlorure, sulfate, perchlorate, chloroacétate, dichloroacétate, trichloroacétate, bromoacétate, dibromoacétate, et les anions de formule générale :

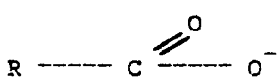

comme les formiates, acétates.

Selon une caractéristique de l'invention, ce traitement hydrothermal est conduit à une température supérieure à 80°C, par exemple comprise entre 80°C et 250°C, de préfence comprise entre 150°C et 250°C pendant une durée de préférence comprise entre 20 minutes et 36 heures.

Selon un mode préféré du procédé de l'invention, la température du traitement hydrothermal est comprise entre 120 et 220°C pendant une période de temps comprise entre 15 minutes et 18 heures.

De préférence, on met en mouvement les agglomérés les uns par rapport aux autres pendant au moins une partie du traitement hydrothermal, cette mise en mouvement étant par exemple générée par le mouvement de l'enceinte dans l'autoclave.

Ce traitement hydrothermal permet notamment la transformation d'au moins une partie de l'alumine en boehmite. Il peut être réalisé avantageusement, soit sous pression de vapeur saturante, soit sous une pression partielle d'eau au moins égale à 70 % environ de la pression de vapeur saturante correspondant à la température de traitement.

Les agglomérés ainsi traités sont ensuite éventuellement séchés à une température généralement comprise entre environ 100°C et 200°C pendant une période de temps suffisante pour enlever l'eau non liée chimiquement à l'alumine. Les agglomérés sont ensuite soumis à un traitement thermique appelé également activation thermique à une température comprise entre environ 400°C et 1 100°C pendant une période de temps comprise entre environ 15 minutes et 2 heures.

La température d'activation est choisie en fonction de l'utilisation des agglomérés. Ainsi, pour une application dans le domaine de la catalyse pour le traitement des gaz d'échappement des moteurs à combustion interne, on préférera une activation à une température comprise entre environ 600 et 1 000°C.

L'invention concerne également un dispositif pour la mise en oeuvre du procédé de traitement hydrothermal.

Ce dispositif comprend un autoclave, une enceinte formant un panier pour recevoir les agglomérés à traiter, cette enceinte étant disposée à l'intérieur de l'autoclave de manière à définir un espace entre au moins la majeure partie des parois de l'autoclave et celles du panier.

Le dispositif comprend également une alimentation en fluide caloporteur débouchant dans l'espace ainsi défini.

Ainsi, le flux de fluide caloporteur ne rentre pas en contact direct avec les agglomérés, la paroi du panier formant un écran protecteur.

Toutefois pour améliorer le chauffage des agglomérés, les parois de l'enceinte ou panier sont, dans un mode de réalisation préféré de l'invention, munies d'une multitude d'ouvertures, au moins sur une partie de sa paroi.

En outre, pour obtenir un traitement plus homogène des agglomérés, le panier est monté dans l'autoclave de manière à pouvoir tourner pour ainsi mettre les agglomérés en mouvement les uns par rapport aux autres.

Avantageusement, les axes de symétrie de l'autoclave et du panier sont identiques.

L'invention a également pour objet des agglomérés d'alumine active constitués d'un empilement de particules d'alumine obtenue par déshydratation d'hydroxyde d'aluminium.

Ces agglomérés présentent après un traitement thermique ou activation à une température supérieure à 400°C, en particulier après un vieillissement de 24 heures à 980°C, une résistance à l'attrition inférieure à 0,3 %, pour un volume poreux total compris entre 0,55 $cm^3/g$ et 1,20 $cm^3/g$, et une densité de remplissage tassée (DRT) comprise entre 0,400 et 0,700.

La résistance à l'attrition est déterminée selon le test suivant :

On introduit un volume donné (60 $cm^3$) de produit à tester dans un erlenmeyer renversé de construction spéciale qui est raccordé à un orifice d'entrée métallique.

Sur la partie plate (le fond) de l'erlenmeyer, on place un grand orifice de sortie (2,54 cm) recouvert d'un tamis de 1,168 mm d'ouverture.

On envoie par l'orifice d'ouverture un fort courant d'azote sec qui a deux effets : (1) il fait circuler les particules l'une sur l'autre, ce qui entraîne une usure par frottement et (2) il provoque le choc des particules contre la partie supérieure de l'erlenmeyer, ce qui provoque leur dégradation selon l'intensité du choc. Le produit est essayé pendant 5 minutes et on pèse les particules restantes. La diminution de poids après l'essai, exprimée en % de la charge initiale, est appelée pourcentage d'usure par frottement.

Selon la densité du produit, on envoie un courant d'azote compris entre environ 99,1 et environ 113,2 $dm^3$/minute. Le débit d'azote doit être suffisant pour que les particules heurtent la partie supérieure de l'erlenmeyer. Les particules fines produites par l'usure par frottement sont entraînées hors de l'erlenmeyer par le courant d'azote, ce qui provoque donc une perte en poids du produit initialement introduit.

Pour mesurer la Densité de Remplissage Tassée on utilise la méthode suivante :

On introduit les agglomérés dans un éprouvette de volume déterminé. Cette éprouvette est soumise à une vibration pour assurer un tassement de billes.

Après remplissage et tassage des agglomérés, on arrase la surface supérieure de celle-ci et on détermine la masse de produits ainsi conditionnée dans l'éprouvette.

$$DRT = \frac{\text{masse de produits}}{\text{volume de l'éprouvette}} \text{ en } g/cm^3$$

Le volume poreux total (Vpt) des agglomérés est déterminé par la formule suivante :

$$Vpt = \frac{f}{DRT} - \frac{1}{E}$$

dans laquelle f représente le coefficient volumique d'entassement (pour des billes sphériques $f = 0,60 \pm 0,04$)

DRT : densité de remplissage tassée

E : densité cristalline de l'alumine (compris entre 3 et 3,6 $g/cm^3$ pour les formes cristallines de transition).

Ce volume poreux total peut également être déterminé expérimentalement par imprégnation par l'eau d'un poids donné d'agglomérés jusqu'à ce que la surface de ces agglomérés devienne humide et détermination du volume d'eau ainsi imprégné.

On caractérise également les agglomérés d'alumine par leur Densité de Grains (DGR) qui est égal à :

$$DRT = f\,DGR$$

avec pour la valeur f la signification ci-dessus.

La densité de grains (DGR) peut être également mesurée par la détermination du volume occupé par une masse déterminée d'alumine par immersion de cette masse dans un volume déterminé de mercure et détermination du volume de mercure déplacé. Pour éviter une pénétration du mercure dans les pores de l'alumine, on n'exerce aucune pression sur le mercure.

Les agglomérés préférés de l'invention ont une forme sphérique et sont employés comme supports de catalyseur dans le domaine du traitement des effluents gazeux tels que les gaz d'échappement des moteurs à combustion ou les fumées des chaudières ainsi que dans les procédés catalytiques de traitement des coupes pétrolières.

Ces agglomérés sont susceptibles d'être obtenus par un traitement hydrothermal conforme à l'invention.

D'autres caractéristiques, avantages et but de l'invention apparaîtront plus clairement au vu des exemples et de la description détaillée faite en référence aux figures annexées données uniquement à titre d'exemple et dans lesquelles :

- La figure 1 représente un vue schématique d'un mode de réalisation du dispositif de l'invention,
- La figure 2 représente une vue à échelle agrandie de la paroi du panier du dispositif de la figure 1 et,
- La figure 3 est une vue d'une coupe d'aggloméré de l'invention prise au Microscope à Balayage électronique avec un agrandissement de 6000 fois.

En se référant aux figures 1 et 2, on décrira ci-dessous un mode de réalisation du dispositif permettant de mettre en oeuvre le procédé de traitement hydrothermal de l'invention.

Ce dispositif comprend un autoclave 1 comprenant notamment un manomètre 2. Cet autoclave comprend également tous les accessoires classiques montés sur ce type d'appareil. Ces différents accessoires n'ont pas été illustrés pour un but de clarté et correspondent à des éléments connus de l'invention.

Le dispositif de l'invention comprend également une enceinte 3 interne, formant un panier dans lequel sont introduits les agglomérés à traiter (non illustré).

Cette enceinte 3 définit avec les parois de l'autoclave 1 un espace 4.

Dans cet espace 4, un fluide caloporteur, par exemple de la vapeur, est alimenté, dans l'exemple illustré, par des rampes 5. Toutefois, d'autres dispositifs d'alimentation peuvent être utilisés, tels qu'une simple arrivée de vapeur dans cet espace 4. Ces rampes sont connectées à une source de fluide caloporteur non représentée.

L'enceinte 3 ou panier est, dans l'exemple illustré, cylindrique et maintenue en position dans l'autoclave 1 par des axes 6 de support. Toutefois, il est possible d'utiliser d'autres systèmes de maintien du panier 3 dans l'autoclave 1 sans pour cela sortir du cadre de l'invention.

Par ailleurs, la forme cylindrique du panier 3 illustrée est donnée uniquement à titre d'exemple. En effet, on peut utiliser des paniers de forme quelconque, sans pour cela sortir du cadre de l'invention.

Le panier ou l'enceinte 3 peut être animé d'un mouvement, par exemple d'un mouvement rotatif, par tout moyen tel que moteur électrique, entraînement crémaillère, etc....

Le panier 3 comprend, dans un mode de réalisation préféré de l'invention, une multitude d'ouverture 7. Dans l'exemple illustré, ces ouvertures sont constituées par des perforations.

Toutefois, ces ouvertures peuvent être constituées, par exemple, par des fentes, des grilles dispersées sur une partie de la paroi de l'enceinte et leur nombre peut être quelconque. Ainsi, un panier comprenant deux fentes permettant l'écoulement des fluides est également convenable pour l'invention.

Enfin, l'autoclave 1 comprend des ouvertures pour permettre l'installation du panier 3 et la vidange de celui-ci, soit par sortie du panier et vidange du panier à l'extérieur de l'autoclave, soit par vidange du panier à l'intérieur de l'autoclave. Ces ouvertures ne sont pas illustrées dans les figures annexées pour plus de clarté.

De manière analogue, le panier 3 comprend des ouvertures pour permettre son remplissage et sa vidange.

Le traitement hydrothermal d'agglomérés d'alumine est réalisé par remplissage du panier 3 avec des agglomérés d'alumine.

Ces agglomérés d'alumine peuvent être, préalablement à leur alimentation dans le panier 3, imprégnés par une solution d'hydrotraitement à savoir, de l'eau ou une solution aqueuse acide.

Mais, il est également possible de disposer les agglomérés dans le panier 3 et d'alimenter directement la solution d'hydrotraitement dans le panier 3 disposé dans l'autoclave, soit par les rampes d'alimentation 5 soit par un système d'alimentation (non illustré) de la solution directement à l'intérieur du panier 3.

Après avoir fermé l'autoclave, de la vapeur d'eau est alimentée dans celui-ci par les rampes d'alimentation 5 pour obtenir la pression de vapeur saturante, et la température désirée.

Ces pressions et températures sont maintenues pendant une durée déterminée avec ou sans rotation du panier 3.

Les agglomérés ainsi traités sont retirés de l'autoclave 1 et du panier 3 pour être ensuite séchés et activés par un traitement thermique.

On donnera ci-dessous, à titre indicatif uniquement, des exemples d'agglomérés obtenus par le procédé de l'invention et les conditions du traitement hydrothermal.

Exemple 1

Des billes d'alumines de diamètre compris entre 2,4 et 4 mm obtenues par agglomération d'alumine provenant de la déshydratation rapide d'hydrargillite, sont traitées selon le procédé de l'invention.

Ces billes ont, avant traitement hydrothermal, les caractéristiques suivantes :

| | |
|---|---|
| Surface spécifique : | 190 $m^2/g$ |
| Vpt (volume poreux total) : | 0,90 $cm^3/g$ |
| Vmp (volume microporeux) : | 0,45 $cm^3/g$ ($\emptyset < 0,1\ \mu m$) |
| VMp (volume microporeux) : | 0,45 $cm^3/g$ ($\emptyset > 0,1\ \mu m$) - 0,35 $cm^3/g$ ($\emptyset > 1\ \mu m$) |

Puis, elles sont imprégnées par immersion avec des solutions acides contenant de l'acide acétique et de l'acide nitrique dans des proportions telles que les billes imprégnées contiennent 7 % en poids d'acide acétique et entre 5 et 17 % d'acide nitrique.

Ces pourcentages sont exprimés par rapport à la masse d'alumine de la bille.

Ces billes sont soumises à un traitement hydrothermal par introduction dans le panier 3 puis envoi de la vapeur d'eau par les rampes de distribution 5.

La température de traitement est de 210°C pendant 2,25 heures.

Les résultats sont rassemblés dans le tableau ci-dessous, dans lequel les abréviations ont la signification suivante :

- SBE : surface spécifique mesurée par la méthode BET ;
- DRT ; densité de remplissage à l'état tassé ;
- VPT : volume poreux total ;
- VMP : volume macroporeux ;
- Vmp : volume microporeux ;
- EGG : résistance à l'écrasemant grain à grain ;
- AGM : résistance à l'attrition (test General Motors).

TABLEAU I

| Essais | % $HNO_3$ | Autoclave | SBE | SBE (V) (1) | DRT | VPT | VMP | Vmp | EGG | AGM |
|---|---|---|---|---|---|---|---|---|---|---|
| 1 | 4,97 | Panier statique | 121 | 62 | 0,42 | 1,146 | 0,34 | 0,70 | 3,08 | 0,2 % |
| 2 | 5,12 | Panier rotatif | 107 | 75 | 0,426 | 1,126 | 0,369 | 0,748 | 3,54 | 0 % |
| 3 | 7,49 | Panier rotatif | 111 | 70 | 0,414 | 1,167 | 0,383 | 0,723 | 3,59 | 0 % |
| 4 | 16,90 | Panier rotatif | 94 | 66 | 0,414 | 1,167 | 0,347 | 0,723 | 3,11 | 0 % |
| 5 | 4 | Sans panier | 110 | 63 | 0,432 | 1,106 | 0,35 | 0,74 | 2,75 | 1,75 |

(1) mesurée après vieillisement 24 h à 980°C

Ces essais montrent, notamment en comparaison avec l'exemple 5 que la réalisation d'un traitement hydrothermal selon l'invention permet d'obtenir des billes présentant une excellente résistance à l'attrition.

Ces essais ont également montré que l'utilisation d'un panier rotatif et donc de la mise en mouvement des billes les unes par rapport aux autres permet de diminuer considérablement le collage entre les billes.

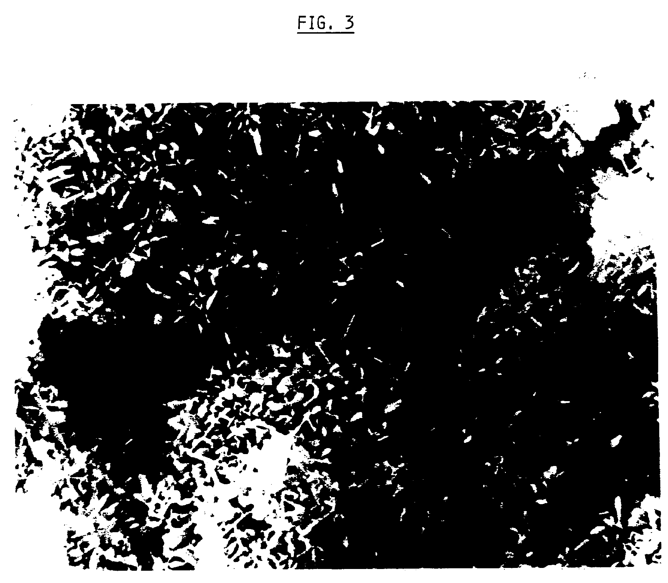

La figure 3 montre la structure des billes et plus particulièrement l'empilement des particules d'alumine.

De plus, dans les conditions de traitement hydrothermal utilisées dans ces essais, le boehmite est sous forme d'aiguilles qui créent une structure type bogue de châtaigne telle que décrite dans le brevet européen n° 98764 et illustré par la figure 3.

## Revendications

1. Procédé de fabrication d'agglomérés d'alumine activée consistant à les soumettre à un traitement hydrothermal dans un autoclave puis à les sécher et les soumettre à un traitement thermique pour obtenir la surface spécifique désirée, caractérisé en ce que le traitement hydrothermal consiste à imprégner les agglomérés avec de l'eau ou une solution aqueuse acide, à les disposer dans une enceinte, à disposer ladite enceinte dans l'autoclave et à porter les agglomérés à une température au moins égale à 80°C par alimentation d'un fluide chaud autour des parois de ladite enceinte.

2. Procédé selon la revendication 1, caractérisé en ce que l'enceinte précitée n'est pas étanche.

3. Procédé selon la revendication 1 ou 2, caractérisé en ce que l'enceinte précitée est remplie partiellement

par les agglomérés d'alumine.

**4.** Procédé selon la revendication 1, 2 ou 3, caractérisé en ce que la température du traitement hydrothermal est comprise entre 80°C et 250°C, de préférence entre 150°C et 250°C.

**5.** Procédé selon l'une des revendications 1 à 4, caractérisé en ce que la durée du traitement hydrothermal est comprise entre 20 minutes et 36 heures.

**6.** Procédé selon l'une des revendications précédentes, caractérisé en ce que la solution aqueuse acide d'imprégnation comprend un ou plusieurs acides choisis dans le groupe comprenant l'acide nitrique, chlorhydrique, perchlorique, sulfurique, les acides faibles, dont la solution a un pH inférieur à 4 tel que l'acide acétique.

**7.** Procédé selon la revendication 6, caractérisé en ce que la solution acide comprend un composé libérant un anion capable de se combiner avec les ions aluminium, ce composé étant choisi dans le groupe comprenant les anions nitrate, chlorure, sulfate, perchlorate, chloroacétate, dichloroacétate, bromoacétate, dibromoacétate et les anions de formule générale

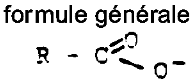

**8.** Procédé selon l'une des revendications précédentes, caractérisé en ce que l'on met en mouvement les agglomérés les uns par rapport aux autres pendant au moins une partie du traitement hydrothermal.

**9.** Procédé selon la revendication 8, caractérisé en ce que cette mise en mouvement est générée par le mouvement de l'enceinte dans l'autoclave.

**10.** Procédé selon l'une des revendications précédentes, caractérisé en ce que le fluide caloporteur est constitué par de la vapeur d'eau.

**11.** Dispositif pour la mise en oeuvre du procédé de traitement hydrothermal selon l'une des revendications précédentes, caractérisé en ce qu'il comprend un autoclave (1), une enceinte (3) formant panier disposée dans ledit autoclave (1) de manière à définir un espace (4) entre au moins la majeure partie des parois de l'autoclave (1) et celles dudit panier (3), ledit panier étant monté de manière rotative dans l'autoclave, et une alimentation (5) en fluide caloporteur débouchant dans ledit espace défini.

**12.** Dispositif selon la revendication 11, caractérisé en ce que le panier précité comprend une multitude d'ouvertures (7) sur au moins une partie de la paroi.

**13.** Agglomérés d'alumine activée susceptibles d'être obtenus par le procédé selon l'une des revendications 1 à 10 caractérisé en ce qu'il consiste en un empilement de particules d'alumine obtenue par déshydratation d'hydroxyde d'aluminium, et présente un volume poreux total compris entre 0,55 $cm^3/g$ et 1,20 $cm^3/g$, une densité de remplissage tassée comprise entre 0,400 et 0,700, et une résistance à l'attrition inférieure à 0,3 % après un vieillissement de 24 heures à 980°C.

## Patentansprüche

**1.** Verfahren zur Herstellung von Formlingen aus aktivierter Tonerde, das darin besteht, sie einer hydrothermalen Behandlung in einem Autoklaven zu unterwerfen, sie zu trocknen, und sie dann thermisch zu behandeln, um die gewünschte spezifische Oberfläche zu erhalten, dadurch gekennzeichnet, daß die hydrothermale Behandlung darin besteht, die Formlinge mit Wasser oder einer sauren wäßrigen Lösung zu imprägnieren, in einen Schutzbehälter zu setzen, diesen Schutzbehälter in einen Autoklaven zu bringen und die Formlinge durch Aufheizen der Schutzbehälterwände mit Hilfe einer heißen Flüssigkeit auf mindestens 80°C zu erwärmen.

**2.** Verfahren nach Anspruch 1, dadurch gekennzeichnet, daß der vorgenannte Schutzbehälter nicht dicht abgeschlossen ist.

**3.** Verfahren nach einem der Ansprüche 1 oder 2, dadurch gekennzeichnet, daß der oben genannte Schutzbehälter teilweise mit den Tonerdeformlingen gefüllt ist.

4. Verfahren nach einem der Ansprüche 1, 2 oder 3, dadurch gekennzeichnet, daß die Temperatur der hydrothermalen Behandlung zwischen 80 und 250°C, vorzugsweise jedoch zwischen 150 und 250°C liegt.

5. Verfahren nach einem der Ansprüche 1 bis 4, dadurch gekennzeichnet, daß die Dauer der hydrothermalen Behandlung zwischen 20 Minuten und 36 Stunden liegt.

6. Verfahren nach einem der vorhergehenden Ansprüche, dadurch gekennzeichnet, daß die saure wäßrige Lösung zur Imprägnierung eine oder mehrere Säuren aus der Gruppe von Salpetersäure, Salzsäure, Perchlorsäure, Schwefelsäure und schwachen Säuren, deren pH-Wert kleiner als 4 ist, wie z.B. Essigsäure, enthält.

7. Verfahren nach Anspruch 6, dadurch gekennzeichnet, daß die saure Lösung eine Verbindung enthält, die ein Anion freisetzen kann, das sich mit den Aluminiumionen verbindet, wobei diese Verbindung aus der Gruppe von Anionen wie Nitrat, Chlorid, Sulfat, Perchlorat, Chloracetat, Dichloracetat, Bromacetat, Dibromacetat und Anionen der allgemeinen Formel

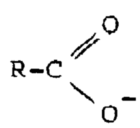

gewählt wird.

8. Verfahren nach einem der vorhergehenden Ansprüche, dadurch gekennzeichnet, daß man die Formlinge für einen Teil der hydrothermalen Behandlung gegeneinander bewegt.

9. Verfahren nach Anspruch 8, dadurch gekennzeichnet, daß diese Bewegung durch die Bewegung des Schutzbehälters im Autoklaven erzeugt wird.

10. Verfahren nach einem der vorhergehenden Ansprüche, dadurch gekennzeichnet, daß die wärmeübertragende Flüssigkeit Wasserdampf ist.

11. Vorrichtung zur Durchführung der hydrothermalen Behandlung nach einem der vorhergehenden Ansprüche, dadurch gekennzeichnet, daß sie einen Autoklaven (1) und einen Schutzbehälter (3) als Korb in besagtem Autoklaven (1) umfaßt, so daß ein Zwischenraum (4) zwischen dem größten Teil der Autoklavenwandflächen (1) und denen des Korbes (3) gebildet wird, wobei der Korb rotierend im Autoklaven angebracht ist, und eine Zuführung (5) für die Wärmetauscherflüssigkeit in den so definierten Zwischenraum einmündet.

12. Vorrichtung nach Anspruch 11, dadurch gekennzeichnet, daß der vorgenannte Korb eine Vielzahl von Öffnungen (7) auf wenigstens einer Seite aufweist.

13. Formlinge aus aktivierter Tonerde, die durch das Verfahren nach einem der Ansprüche 1 bis 10 erhalten werden können, dadurch gekennzeichnet, daß sie aus einer Aufschichtung von Tonerdepartikeln bestehen, die durch Dehydratisierung von Aluminiumhydroxid erhalten wurden und ein Gesamtporenvolumen zwischen 0,55 $cm^3/g$ und 1,20 $cm^3/g$, eine Stampfdichte zwischen 0,4 und 0,7 und einen Verschleiß durch Abrieb von weniger als 0,3 % nach einer Alterung von 24 Stunden bei 980°C aufweisen.

## Claims

1. Process for the manufacture of activated alumina agglomerates consisting in subjecting them to a hydrothermal treatment in an autoclave and then in drying them and subjecting them to a thermal treatment to obtain the desired specific surface, characterized in that the hydrothermal treatment consists in impregnating the agglomerates with water or an acidic aqueous solution, in placing them in an enclosure, in placing the said enclosure in the autoclave and in bringing the agglomerates to a temperature at least

equal to 80°C by supplying a hot fluid around the walls of the said enclosure.

2. Process according to claim 1, characterized in that the abovementioned enclosure is not leakproof.

3. Process according to claim 1 or 2, characterized in that the abovementioned enclosure is partially filled with the alumina agglomerates.

4. Process according to claim 1, 2 or 3, characterized in that the temperature of the hydrothermal treatment is between 80°C and 250°C, preferably between 150°C and 250°C.

5. Process according to one of claims 1 to 4, characterized in that the duration of the hydrothermal treatment is between 20 minutes and 36 hours.

6. Process according to one of the preceding claims, characterized in that the acidic aqueous solution for impregnation comprises one or a number of acids chosen from the group comprising nitric, hydrochloric, perchloric or sulphuric acid or the weak acids, whose solution has a pH less than 4, such as acetic acid.

7. Process according to claim 6, characterized in that the acidic solution comprises a compound which releases an anion capable of combining with the aluminium ions, this compound being chosen from the group comprising nitrate, chloride, sulphate, perchlorate, chloroacetate, dichloroacetate, bromoacetate or dibromoacetate anions and the anions of general formula

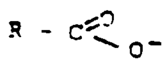

8. Process according to one of the preceding claims, characterized in that the agglomerates are set in motion with respect to each other for at least part of the hydrothermal treatment.

9. Process according to claim 8, characterized in that this setting in motion is generated by the movement of the enclosure in the autoclave.

10. Process according to one of the preceding claims, characterized in that the heat-exchange fluid consists of steam.

11. Device for implementation of the process for hydrothermal treatment according to one of the preceding claims, characterized in that it comprises an autoclave (1), an enclosure (3) forming a basket placed inside the said autoclave (1) so as to define a space (4) between at least the major part of the walls of the autoclave (1) and those of the said basket (3), the said basket being mounted rotationally in the autoclave, and a supply (5) of heat-exchange fluid emerging into the said defined space.

12. Device according to claim 11, characterized in that the abovementioned basket comprises a multitude of openings (7) on at least a part of the wall.

13. Activated alumina agglomerates capable of being obtained by the process according to one of claims 1 to 10, characterized in that it consists of a stack of alumina particles obtained by dehydration of aluminium hydroxide, and has a total pore volume of between 0.55 $cm^3/g$ and 1.20 $cm^3/g$, a packed filling density of between 0.400 and 0.700, and a resistance to attrition which is less than 0.3 % after ageing for 24 hours at 980°C.

FIG.1

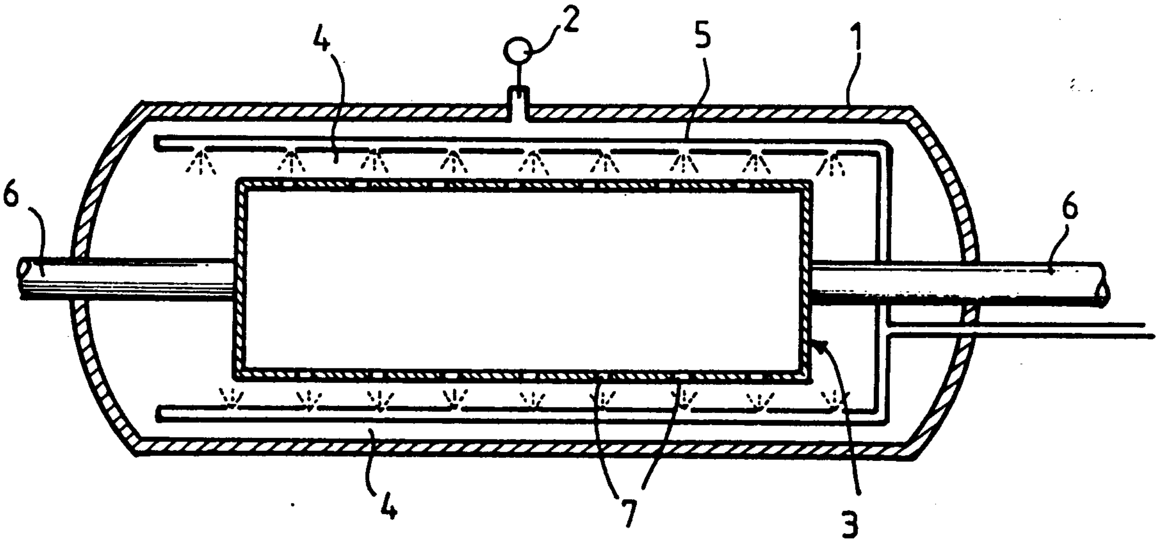


FIG.2

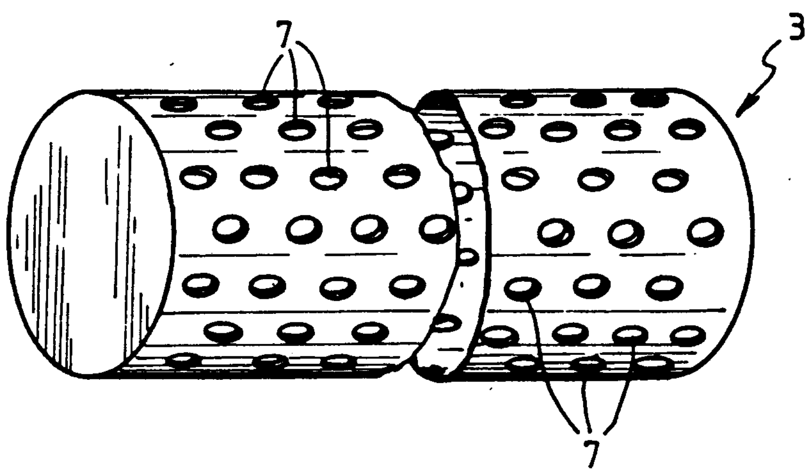

FIG. 3